# EUROPEAN PATENT APPLICATION

(11) **EP 1 967 543 A1**
(43) Date of publication of application: **10.09.2008**
(21) Application number: 08003930.8
(22) Date of filing: 03.03.2008
(51) Int. Cl.: C08K 7/22, C08L 23/22, B60C 1/00

(54) **Rubber composition for inner liner**

(30) Priority: 06.03.2007 JP 2007055734
(71) Applicant: SUMITOMO RUBBER INDUSTRIES, LTD., Hyogo-ken (JP)
(72) Inventor: Otsuki, Hirotoshi, Kobe-shi, Hyogo-ken (JP)
(74) Representative: Manitz, Finsterwald & Partner GbR

(57) **Abstract**

A rubber composition used for an inner liner layer that reduces an amount of air permeation, lessens density of the rubber composition and does not lower fracture property of the rubber composition is provided. The rubber composition is used for an inner liner layer of an inner surface of a tire and comprises 1 to 30 parts by weight of thermal expansion microcapsules based on 100 parts by weight of rubber components containing a butyl rubber in an amount of not less than 80 % by weight, wherein an outer shell portion of independent thermal expansion microcapsules is made of a thermoplastic resin, and an average particle diameter of the thermal expansion microcapsules is 10 to 95 µm.

## Description

The present invention relates to a rubber composition used for an inner liner layer of an inner surface of a tire and a tire using the rubber composition.

Many methods of reducing an amount of air permeation by compounding a scaly filler such as silica or a resin powder in a rubber component have been proposed for an inner liner layer of a tire (for example, refer to Japanese Unexamined Patent Publication No. 2004-345470). However, there have been problems that when the compounding amount of these fillers is increased, density of a rubber composition is increased and fracture properties of the rubber composition are lowered.

Further, it is known that an amount of air permeation is reduced by adding microcapsules having an outer shell portion made of glass to a rubber composition used for an inner liner layer, but there have been a problem that the glass of the outer shell is destroyed in a process for mixing the microcapsules in a rubber component and performance is lowered and a problem that the microcapsules themselves become a nucleus of fracture.

It is an object of the present invention to provide a rubber composition used for an inner liner layer that reduces an amount of air permeation, lessens density of a rubber composition and does not lower fracture properties of the rubber composition.

The present invention relates to a rubber composition used for an inner liner layer of an inner surface of a tire comprising 1 to 30 parts by weight of independent thermal expansion microcapsules based on 100 parts by weight of rubber components containing a butyl rubber in an amount of not less than 80 % by weight, wherein an outer shell portion of the thermal expansion microcapsules is made of a thermoplastic resin, and an average particle diameter of the thermal expansion microcapsules is 10 to 95 µm.

The density of the rubber composition is preferably less than 1 g/cm³.

Further, the present invention relates to a tire having an inner liner layer comprising the rubber composition.

The rubber composition of the present invention is a rubber composition used for an inner liner layer of an inner surface of a tire comprising a butyl rubber and independent thermal expansion microcapsules having an outer shell portion made of a thermoplastic resin.

The content of the butyl rubber is not less than 80 % by weight in the rubber components from the viewpoint of obtaining adequate reduction effect of air permeation, preferably not less than 90 % by weight from the viewpoint of good heat aging resistance. An upper limit of the content of the butyl rubber is 100 % by weight.

The rubber composition of the present invention may comprise diene rubbers such as a natural rubber (NR), a styrene-butadiene rubber (SBR), a butadiene rubber (BR) and an isoprene rubber (IR); an acrylonitrile-butadiene rubber (NBR), an epoxidized natural rubber, an epichlorohydrin rubber, and a chloroprene rubber in addition to the butyl rubber, as the rubber components.

The independent thermal expansion microcapsules having an outer shell portion made of a thermoplastic resin are spherical hollow particles having a cavity in the inside. The "spherical" mentioned here means a shape of round particles having no sharp portion and encompasses also an elliptical shape and a shape having a partly dented portion. Further, the "independent" means that the thermal expansion microcapsules do not mutually adhere and exist separately.

Preferable examples of the thermoplastic resin for the outer shell portion of the thermal expansion microcapsules are, for instance, a polymer of (meth)acrylonitrile and a copolymer with a high content of (meth)acrylonitrile. In the copolymer, monomers such as vinyl halide, vinylidene halide, styrene monomer, (meth)acrylate monomer, vinyl acetate, butadiene, vinyl pyridine and chloroprene are used as other monomers (comonomers). Examples of the thermoplastic resin are divinyl benzene, ethylene glycol di(meth)acrylate, triethylene glycol di(meth)acrylate, trimethylolpropane tri(meth)acrylate, 1,3-butylene glycol di(meth)acrylate, allyl (meth)acrylate, triacryl formal and triallyl isocyanurate. The thermoplastic resin is preferably not crosslinked, but may be partially crosslinked to such an extent not to damage properties as the thermoplastic resin.

Examples of the thermoplastic resin particles including a liquid being a starting material of the thermal expansion microcapsules are, for instance, "EXPANCEL 091DU-80" and "EXPANCEL 092DU-120" manufactured by EXPANCEL Inc. in Sweden and "MATSUMOTO MICROSPHERE F-85", "MATSUMOTO MICROSPHERE F-100", "MATSUMOTO MICROSPHERE F-80S" and "MATSUMOTO MICROSPHERE F-80VS" manufactured by Matsumoto Yushi-Seiyaku Co., Ltd.

For producing the thermal expansion microcapsules, for example, thermally expanding thermoplastic resin particles including a liquid that is vaporized by heat to generate a gas are heated at a temperature equal to or higher than the expansion starting temperature thereof to be expanded and as a result, there are obtained thermoplastic resin microcapsules in a state that a gas is encapsulated inside the outer shell made of the thermoplastic resin.

The thermal expansion microcapsules contained in the rubber composition of the present invention are those obtained by heating thermally expanding thermoplastic resin particles, and the thermal expansion microcapsules before the heating are called thermally expanding thermoplastic resin particles.

The temperature for heating and expanding the thermally expanding thermoplastic resin particles including a liquid is preferably not less than 130°C, more preferably at least 140°C from the viewpoint that expansion property of the thermally expanding thermoplastic resin particles is good. Further, the temperature for heating and expanding is preferably not more than 190°C, more preferably not more than 180°C from the viewpoint that the stability of expansion property is good.

The average particle diameter of the thermoplastic resin particles before thermal expansion is preferably not less than 5 µm, more preferably not less than 10 µm from the viewpoint that dispersibility to a rubber is good. Further, the average particle diameter of the thermoplastic resin particles before thermal expansion is preferably not more than 50 µm, more preferably not more than 40 µm from the viewpoint that fracture by mixing is little.

Examples of the liquid that is vaporized by heat to generate a gas are liquids such as hydrocarbons such as n-pentane, isopentane, neopentane, butane, isobutane, hexane and petroleum ether; and chlorinated hydrocarbons such as methyl chloride, methylene chloride, dichloroethylene, trichloroethane and trichloroethylene.

The average particle diameter of the thermal expansion microcapsules is not less than 10 µm for obtaining the effect of the present invention, preferably not less than 20 µm, more preferably not less than 30 µm from the viewpoint that the air permeation inhibiting property is good. Further, the average particle diameter of the thermal expansion microcapsules is not more than 95 µm from the viewpoint that a distance between the thermal expansion microcapsules is adequately kept and the rubber components are not destroyed by the influence of distortion caused by tire running.

The content of the thermal expansion microcapsules is not less than 1 part by weight based on 100 parts by weight of the rubber components from the viewpoint that an adequate hardness as a rubber for an inner liner is obtained, preferably not less than 5 parts by weight from the viewpoint that the air permeation inhibiting property is good and more preferably not less than 10 parts by weight from the viewpoint of cost reduction. Further, the content of the thermal expansion microcapsules is not more than 30 parts by weight, preferably not more than 20 parts by weight based on 100 parts by weight of the rubber components from the viewpoint that the crack growth resistance is good.

The density of the thermal expansion microcapsules is preferably not less than 0.02 g/cm³ from the viewpoint that crack growth resistance is good. Further, the density of the thermal expansion microcapsules is preferably not more than 0.05 g/cm³ from the viewpoint that the density of the rubber composition is lowered.

In the rubber composition of the present invention used for an inner liner layer of an inner surface of a tire, further, additives that are generally used in the tire industry, such as reinforcing agents such as a carbon black and silica; a softening agent such as aromatic oil; stearic acid, zinc oxide, a vulcanizing agent such as sulfur and a vulcanization accelerator can be optionally compounded.

The content of the carbon black compounded in the rubber composition is preferably not less than 40 parts by weight based on 100 parts by weight of the rubber components from the viewpoint that air permeation inhibiting property and crack growth resistance are good and more preferably not less than 50 parts by weight from the viewpoint that crack growth resistance is good. Further, the content of the carbon black compounded in the rubber composition is preferably not more than 80 parts by weight based on 100 parts by weight of the rubber components from the viewpoint that low heat build-up property is superior and crack growth resistance is superior and more preferably not more than 70 parts by weight from the viewpoint that crack growth resistance is good.

The nitrogen adsorption specific surface area of the carbon black is preferably not less than 20 m²/g, more preferably not less than 25 m²/g from the viewpoint that crack growth resistance is good. Further, the nitrogen adsorption specific surface area of the carbon black is preferably not more than 60 m²/g from the viewpoint that low heat build-up property and fatigue resistance are improved, more preferably not more than 50 m²/g from the viewpoint that air permeation inhibiting property is good.

When the thermal expansion microcapsules having an outer shell portion made of a thermoplastic resin are contained in the rubber composition, the density of the whole rubber composition can be relatively lowered because the density of the thermal expansion microcapsules is small.

Although cost of the thermal expansion microcapsules having an outer shell portion made of a thermoplastic resin is generally higher than that of a rubber, it occasionally becomes lower depending on kind of a rubber to be used, when comparing cost per volume because they are materials with an extremely low density. In such a case, by compounding the thermal expansion microcapsules, it becomes possible to achieve weight saving and cost reduction in addition to improvement in performance of the rubber.

The density of the rubber composition is preferably not less than 0.75 g/cm³, more preferably not less than 0.78 g/cm³ from the viewpoint that crack growth resistance and reinforcing property are good. Further, the density of the rubber composition is preferably less than 1 g/cm³, more preferably not more than 0.99 g/cm³, further preferably not more than 0.90 g/cm³ from the viewpoint that weight saving can be achieved.

In the present invention, since the outer shell portion of the thermal expansion microcapsules is made of a thermoplastic resin, it is elastic, and since the particle diameter of the thermoplastic resin including a liquid before thermal expansion is small, destruction of the thermal expansion microcapsules is little in the kneading step of a rubber.

Further, air or moisture hardly permeates the thermoplastic resin of the outer shell portion of the thermal expansion microcapsules as compared with a butyl rubber. Accordingly, air or moisture passing the rubber components must detour around the spheres of the thermal expansion microcapsules and a moving distance is elongated. As a result, air permeation inhibiting property is improved.

A rubber composition used for a usual inner liner layer is generally produced using two kneading steps comprising a first kneading step of kneading chemicals other than a vulcanizing agent and a vulcanizing accelerator and a second kneading step of adding a vulcanizing agent and a vulcanizing accelerator to the kneaded article obtained in the first step and further kneading the mixture.

In the rubber composition of the present invention used for an inner liner layer, the compounding of the thermal expansion microcapsules may be carried out in either of the first kneading step and the second kneading step.

Then a kneading temperature in the case of compounding the thermally expanding thermoplastic resin particles in the first kneading step or the second kneading step is explained. The kneading temperature in the kneading step where the thermally expanding thermoplastic resin particles are compounded is required to be set at a temperature at which the liquid contained in the thermoplastic resin is not evaporated to expand the microcapsules. This is because when the kneading is carried out at a temperature higher than such a liquid vaporization temperature, the volume of the rubber composition is increased and cannot be taken out from a mixer or cannot be extruded into a specified dimension in the later step.

Accordingly, it is preferable that the thermally expanding thermoplastic resin particles including a liquid are compounded in the second kneading step of adding the vulcanizing agent and the vulcanizing accelerator to the kneaded article obtained in the first kneading step, and the thermal expansion microcapsules are formed by thermally expanding the resin particles in the following vulcanizing step of heating and pressurizing in a vulcanizer.

The tire of the present invention is produced by a usual method using the rubber composition of the present invention used for an inner liner layer. That is, the rubber composition is extruded and molded into the shape of the inner liner of a tire at an unvulcanized stage and laminated by a usual method on a tire molding machine to form unvulcanized tires. The pneumatic tires are obtained by heating and pressuring the unvulcanized tires in a vulcanizer.

### EXAMPLES

Various chemicals used in Examples and Comparative Examples are specifically described below.
Br-IIR2255: Butyl rubber manufactured by Exxon Mobil
NR: Natural rubber RSS#3
CB GPF: Carbon black SEAST V available from Tokai Carbon Co., Ltd. (a nitrogen adsorption specific surface area: 27 m³/g, DBP oil absorption quantity: 87 cm³/100 g)
Thermal Expansion Microcapsule 1: Thermoplastic resin particles including a liquid available from Matsumoto Yushi-Seiyaku Co., Ltd. (MATSUMOTO MICROSPHERE F-80VS (average particle diameter after expansion: 20 to 40 µm))
Thermal Expansion Microcapsule 2: Thermoplastic resin particles including a liquid available from Matsumoto Yushi-Seiyaku Co., Ltd. (MATSUMOTO MICROSPHERE F-82 (average particle diameter after expansion: 100 to 160 µm))
Thermal Expansion Microcapsule 3: Thermoplastic resin particles including a liquid available from Matsumoto Yushi-Seiyaku Co., Ltd. (MATSUMOTO MICROSPHERE F-80S (average particle diameter after expansion: 50 to 90 µm))

The average particle diameter of the thermal expansion microcapsules after expansion is measured as forth. The rubber sheets obtained by vulcanizing at 150°C for 30 min are solidified by cooling with carbon dioxide gas. Then a section of the rubber sheets cut by microtome cutter is observed with an electron microscope. After that, particle diameters of ten thermal expansion microcapsules are measured, and the average value thereof is assumed to be an average particle diameter.
Paraffin oil: DIANA PROCESS OIL manufactured by Idemitsu Kosan Co., Ltd.
Adhesive resin: SP6700 manufactured by Nippon Shokubai Co., Ltd.
Zinc oxide: ZINC OXIDE #2 available from Mitsui Mining & Smelting Co., Ltd.
Stearic acid: Stearic acid available from NOF CORPORATION
Sulfur: SEIMI SULFUR manufactured by Nippon Kanryu Kogyo K.K.

### EXAMPLES 1 to 6 and COMPARATIVE EXAMPLES 1 to 5

Chemicals other than the thermoplastic resin particles including a liquid being a starting material of the thermal expansion microcapsules, sulfur and a vulcanization accelerator were kneaded according to the compounding prescriptions shown in Table 1 under the condition of a discharge temperature of 160°C for 2.5 minutes using a Banbury mixer, to obtain kneaded articles (first kneading step). Then, the thermoplastic resin particles including a liquid, sulfur and the vulcanization accelerator were added to the obtained kneaded articles and the mixture was kneaded under the condition of a discharge temperature of 100°C for 2 minutes using a Banbury mixer, to obtain unvulcanized rubber compositions (second kneading step). Further, vulcanized rubber compositions of Examples 1 to 6 and Comparative Examples 1 to 5 were obtained by press-vulcanizing the unvulcanized rubber compositions under the condition of 150°C for 30 min (vulcanizing step).

### (DEMATTIA flex crack growth test)

The samples of the vulcanized rubber compositions are tested under the conditions of a temperature of 23°C and a relative humidity of 55 % in accordance with JIS K6260 "DEMATTIA flex crack growth test method of vulcanized rubber and thermoplastic rubber". Those in which the crack length after the test at five million times is not less than 5 mm are referred to as rejection (shown as rej. in Table
1) and those in which it is less than 5 mm are referred to as acceptance (shown as acc. in Table 1).
   (Rubber density)
   0.5 g of a rubber composition is cut out from the vulcanized rubber composition sheet with a thickness of 2 mm and the rubber density is measured with a specific gravimeter. When the rubber density is less than 1 g/cm³, it is judged that weight saving has been attained.
   (Air permeation performance)
   The air permeation performance is measured at 40°C in accordance with an ASTM P-1434-75M method using an air permeation measurement machine (GTR TESTER M-C1) manufactured by Toyo Seiki Seisaku-sho Ltd. The air permeation performance is represented by an index assuming that the value of Comparative Example 1 is 100. The larger the value is, the better air permeation inhibiting property is. When the index is not less than 110, air permeation inhibiting property is judged as being improved.
   (Cost)
   The volume material cost of the rubber composition of Comparative Example 1 is referred to as 100 to carry out indexation. The smaller the value is, the lower the cost is.

Table 1 shows the respective evaluation results.

**TABLE 1**

| | Ex. | | | | | | Com. Ex. | | | | |
|---|---|---|---|---|---|---|---|---|---|---|---|
| | 1 | 2 | 3 | 4 | 5 | 6 | 1 | 2 | 3 | 4 | 5 |
| Contents (part by weight) | | | | | | | | | | | |
| BR-IIR2255 | 100 | 100 | 80 | 100 | 100 | 80 | 100 | 100 | 100 | 79 | 100 |
| NR | - | - | 20 | - | - | 20 | - | - | - | 21 | - |
| CB GPF | 60 | 60 | 60 | 60 | 60 | 60 | 60 | 60 | 60 | 60 | 60 |
| Thermal Expansion Microcapsule 1 | 1 | 15 | 30 | - | - | - | - | 0.5 | 30.5 | 30 | - |
| Thermal Expansion Microcapsule 2 | - | - | - | - | - | - | - | - | - | - | 15 |
| Thermal Expansion Microcapsule 3 | - | - | - | 1 | 15 | 30 | - | - | - | - | - |
| Paraffin oil | 10 | 10 | 10 | 10 | 10 | 10 | 10 | 10 | 10 | 10 | 10 |
| Adhesive resin | 5 | 5 | 5 | 5 | 5 | 5 | 5 | 5 | 5 | 5 | 5 |
| Zinc oxide | 3 | 3 | 3 | 3 | 3 | 3 | 3 | 3 | 3 | 3 | 3 |
| Stearic acid | 1.2 | 1.2 | 1.2 | 1.2 | 1.2 | 1.2 | 1.2 | 1.2 | 1.2 | 1.2 | 1.2 |
| Sulfur | 0.5 | 0.5 | 0.5 | 0.5 | 0.5 | 0.5 | 0.5 | 0.5 | 0.5 | 0.5 | 0.5 |
| Evaluation Results | | | | | | | | | | | |
| Crack growth | acc. | acc. | acc. | acc. | acc. | acc. | acc. | acc. | rej. | acc. | rej. |
| Rubber density | 1.119 | 0.96 | 0.8 | 1.055 | 0.90 | 0.76 | 1.13 | 1.12 | 0.8 | 0.81 | 0.7 |
| Air permeation performance | 110 | 120 | 110 | 115 | 125 | 115 | 100 | 105 | 130 | 109 | 140 |
| Cost | 99 | 91 | 81 | 95 | 86 | 75 | 100 | 100 | 82 | 80 | 75 |

Since the rubber composition of the present invention contains thermal expansion microcapsules having an outer shell portion made of a thermoplastic resin, it has flexibility, and since the thermoplastic resin including a liquid before thermal expansion has a small particle diameter, destruction of the thermal expansion microcapsules is little in a kneading step and a vulcanization step of the rubber composition.

Further, since the outer shell portion of the thermal expansion microcapsules in the rubber composition is made of a thermoplastic resin, air or moisture hardly permeates the microcapsules as compared with a butyl rubber. Accordingly, air or moisture passing the rubber composition must detour around the spheres of the thermal expansion microcapsules and a moving distance is elongated; as a result, air permeation inhibiting property is improved.

Further, since the interior of the thermal expansion microcapsules is hollow, the density of the rubber composition can be lowered.

## Claims

1. A rubber composition used for an inner liner layer of an inner surface of a tire comprising 1 to 30 parts by weight of independent thermal expansion microcapsules based on 100 parts by weight of rubber components containing a butyl rubber in an amount of not less than 80 % by weight,
wherein an outer shell portion of said thermal expansion microcapsules is made of a thermoplastic resin,
and an average particle diameter of said thermal expansion microcapsules is 10 to 95 µm.

2. The rubber composition of Claim 1, wherein density of the rubber composition is less than 1 g/cm³.

3. A tire having an inner liner layer comprising the rubber composition of Claim 1 or 2.
